# EUROPÄISCHE PATENTANMELDUNG

(11) **EP 2 347 648 A1**
(43) Veröffentlichungstag der Anmeldung: **27.07.2011**
(21) Anmeldenummer: 10015220.6
(22) Anmeldetag: 02.12.2010
(51) Int. Cl.: A01K 5/00, B01F 7/24

(54) **Futtermischwagengetriebeanordnung und Futtermischwagen**

(30) Priorität: 25.01.2010 DE 202010001357 U
(71) Anmelder: Rögelberg Holding GmbH & Co. KG, 49716 Meppen (DE)
(72) Erfinder: Seggering, Manfred, 49744 Dalum (DE); Pleus, Karlheinz, 49779 Oberlangen (DE)
(74) Vertreter: Wischmeyer, André

(57) **Zusammenfassung**

Futtermischwagengetriebeanordnung für einen eine Mehrzahl von Schnecken (1) aufweisenden Futtermischwagen, mit einer von einem Schleppfahrzeug antreibbaren Antriebswelle (8), über die mittels wenigstens eines Antriebsstrangs eine Mehrzahl von zu den Schnecken (1) führenden Abtrieben (4) antreibbar sind, wobei wenigstens einer der Abtriebe (4) über eine schaltbare Kupplung (14) mit dem Antriebsstrang antriebsmäßig verbindbar ist, um das von der Antriebswelle (8) übertragene Moment unter gezielter Auslassung oder Zuschaltung der über die Kupplung (14) verbindbaren Schnecke (1) zu übertragen. Des Weiteren betrifft die Erfindung einen Futtermischwagen mit einer vorbezeichneten Getriebeanordnung.

## Beschreibung

Die Erfindung betrifft eine Futtermischwagengetriebeanordnung für einen eine Mehrzahl von Schnecken aufweisenden Futtermischwagen, mit einer von einem Schleppfahrzeug antreibbaren Antriebswelle, über die mittels wenigstens eines Antriebsstrangs eine Mehrzahl von zu den Schnecken führenden Abtrieben antreibbar sind. Des Weiteren betrifft die Erfindung einen Futtermischwagen mit einer vorbeschriebenen Futtermischwagengetriebeanordnung.

Bei der Fütterung von Milchvieh werden oftmals Futtermischwagen von kleinen Schleppern durch die Stallungen des Milchviehs gezogen. Aus diesem Futtermischwagen erfolgt dann der Austrag des Futters, wobei in dem Futtermischwagen angeordnete Schnecken mit oder ohne Seele das im Futtermischwagen befindliche Futter vor dem Austrag durchmischen. Der Antrieb der Schnecken erfolgt über eine Futtermischwagengetriebeanordnung, die beispielsweise über ihre Antriebswelle und eine Gelenkwelle mit dem Zapfantrieb eines Schleppers verbunden ist.

Je nach Dichte des Futters kann es zu einer Blockade der Drehung der Schnecken kommen, insbesondere dann, wenn das Futter über Nacht im Futtermischwagen gestanden und sich verdichtet hat. Die Leistung der Schleppers ist oftmals nicht ausreichend, diese Blockade zu überwinden. Für diesen Fall kann im Antriebsstrang bei bekannten Futtermischwagengetriebeanordnungen eine Bolzen- oder Stiftkupplung vorgesehen sein, die bei einer Blockade der zugehörigen Schnecke bricht. Das in die Getriebeanordnung eingespeiste Drehmoment verteilt sich dann auf die verbleibende und im Antriebsstrang vorher angeordnete Schnecke. Das Bedienpersonal muss dann den gebrochenen Bolzen oder Stift ersetzen.

Es ist Aufgabe der vorliegenden Erfindung, den Betrieb eines Futtermischwagens mittels einer Futtermischwagengetriebeanordnung ausfallsicherer und komfortabler zu gestalten.

Die Aufgabe wird durch eine Futtermischwagengetriebeanordnung gemäß Anspruch 1 sowie durch einen Futtermischwagen gemäß Anspruch 15 gelöst.

Erfindungsgemäß ist vorgesehen, wenigstens einen der Abtriebe über eine schaltbare Kupplung mit dem Antriebsstrang antriebsmäßig zu verbinden, um das von der Antriebswelle übertragene Moment unter gezielter Auslassung der über die Kupplung verbindbaren Schnecke auf die übrigen Schnecken zu übertragen. Bei einer Blockade kann die blockierte Schnecke somit gezielt aus dem Antriebsstrang entfernt werden, so dass das Drehmoment sich auf die übrigen Abtriebe verteilt. Der Futtermischwagen kann mit den übrigen Schnecken leer gefahren werden. Ebenfalls kann die blockierte Schnecke alleine mit dem vollen Drehmoment auch eines kleinen Schleppers beaufschlagt werden, um die Blockade gegebenenfalls zu lösen und anschließend die weiteren Schnecken gezielt zuschalten zu können. Durch die Erfindung wird es dem Bedienpersonal ermöglicht, einzelne Schnecken des Futtermischwagens gezielt anzusteuern.

Beispielsweise können bei einem mit einem mit drei Schnecken und drei zugeordneten Kupplungen versehenen, erfindungsgemäßen Futtermischwagen alle drei Schnecken einzeln aus dem Antriebsstrang entfernt oder entsprechend zugeschaltet werden, was eine gezielte Bearbeitung des im Futtermischwagen befindlichen Futters und eine gute Umgehung oder Lösung von Blockaden auch mit kleinen Schleppern ermöglicht. Als Abtrieb werden hierbei von dem Antriebsstrang zu den Schnecken hinführende Teile der Getriebeanordnung verstanden.

Vorzugsweise ist die Kupplung als unter Last schaltbare Kupplung ausgebildet, so dass die Futtermischwagengetriebeanordnung nicht erst entlastet werden muss, sondern im laufenden Betrieb ein- oder ausgeschaltet werden kann. Ein Auskoppeln eines Abtriebes und der zugehörigen Schnecke kann auch automatisiert erfolgen, wenn beispielsweise eine Steuervorrichtung über die Drehzahlsensoren an den jeweiligen Wellen eine zu große Drehzahldifferenz feststellt. Hierzu ist die Steuervorrichtung mit den Stellmitteln der schaltbaren Kupplung verbunden.

Vorteilhafterweise ist die Kupplung als Lamellenkupplung ausgebildet. Über eine solche Kupplung können trotz kleiner Bauweise große Drehmomente übertragen werden, so dass der typischerweise zumindest teilweise unterhalb des Futtermischraumes angeordnete Antriebsstrang weiterhin klein baut. Hierbei kann die Lamellenkupplung um die Antriebswelle oder eine weitere Welle des Antriebsstrangs herum angeordnet werden, um den zur Verfügung stehenden Platz optimal auszunutzen.

Die Antriebswelle ist bei einer Lösung mit zumindest teilweise hintereinander im Antriebsstrang angeordneten Abtrieben vorzugsweise Teil des Antriebsstrangs. Sie kann bei mehreren unabhängig voneinander über ein Verteilergetriebe antreibbaren Antriebssträngen diesem auch vorgelagert sein.

Vorzugsweise verbindet die Kupplung im Ausgangszustand den zugehörigen Abtrieb mit dem Antriebsstrang, so dass im Normalfall, in dem alle Schnecken in Betrieb sind, von einer etwaigen Steuerungsvorrichtung keine Kraft auf die insbesondere als Lamellenkupplung ausgebildete Kupplung ausgeübt werden muss. Die Kupplung kann hierzu beispielsweise eine Feder oder andere Kraftspeicher aufweisen, die einen Anpressdruck z.B. auf die Lamellen einer Lamellenkupplung erzeugen und somit die Kupplung im eingekuppelten Zustand halten. Alternativ kann ein solcher Kraftspeicher auch dazu verwendet werden, die Kupplungsverbindung automatisch bei Drucklosstellung zu lösen.

Besonders vorteilhaft ist eine Ausführungsform der Erfindung, bei der die Kupplung gleichzeitig als Überlastsicherung ausgebildet ist. Dies kann beispielsweise durch eine Einstellbarkeit des Anpressdrucks auf einen Lamellensatz einer Lamellenkupplung entweder werkseitig oder durch betätigbare Stellmittel realisiert werden. Vorzugsweise ist die Kupplung antriebsmäßig zwischen einem zur Schnecke führenden Zahnrad und der Antriebswelle oder einer den Antriebsstrang mit ausbildenden Zwischenwelle angeordnet, was die Bauteilbelastungen im ausgekuppelten Zustand reduziert. Sie kann jedoch auch hinter den Abtrieb oder in den Abtrieb auf dessen Abtriebsseite integriert werden, was für Varianten ohne zusätzliche, zu den Schnecken führende Getriebe vorteilhaft sein kann. Zusätzlich ist die Kupplung bevorzugt auf der der Antriebswelle zugewandten Seite des Abtriebes anzuordnen, um die Kraft über möglichst kurze Wege zwischen Antrieb und Abtrieb zu übertragen und möglichst wenig Bauraum zu belegen. Es versteht sich, dass sich je nach Anordnung der Kupplung vor oder hinter dem Abtrieb und der Zahnräder im Abtrieb eine Drehrichtungsumkehr im Abtrieb ergeben kann.

Eine besonders platzsparende Ausbildung der Erfindung ist dadurch gekennzeichnet, dass die Kupplung antriebsmäßig zwischen Antriebsstrang und einer eine Welle des Antriebsstrangs umschließenden Hohlwelle angeordnet ist, auf der das Zahnrad festgelegt ist. Das Zahnrad kann beispielsweise einstückig mit der Hohlwelle ausgebildet sein oder auf dieser fest gelagert sein. Hierdurch baut der Abtrieb weniger in den seitlich und/oder unterhalb des Antriebsstrangs vorhandenen Bauraum hinein.

Die Hohlwelle kann auf einer Welle des Antriebsstrangs gelagert werden, was zu weiteren Platzeinsparungen führen kann. Bevorzugt ist sie jedoch in dem Abtriebsgehäuse oder einem zum Antriebsstrang gehörenden Rahmen gelagert.

Die Futtermischwagengetriebeanordnung ist vorteilhaft weitergebildet, indem die Kupplung als an die übrige Futtermischwagengetriebeanordnung anflanschbare Nachrüstlösung ausgebildet ist. Hierzu kann ein auf einer Zwischenwelle befindliches Kegelrad durch eine vorbeschriebene, ein Kegelrad aufweisende Hohlwelle ersetzt werden, die über die Kupplung mit dem Antriebsstrang verbindbar ist. Die Kupplung selbst ist hierbei auf einer Zwischenwelle des Antriebsstrangs oder einer Antriebswelle zu befestigen und im Übrigen mit dem Gehäuse des beispielsweise als Winkelabtriebs ausgebildeten Abtriebs angeflanscht werden. Ebenfalls kann die Kupplung zusammen mit einer dann neuen Zwischen- oder Antriebswelle die bisherige ersetzen.

Vorteilhafterweise ist die Futtermischwagengetriebeanordnung bei einer Ausbildung mit zumindest drei Abtrieben für drei Schnecken mit einem Antriebsstrang versehen, der eine Mehrzahl von miteinander verbundenen Zwischenwellen aufweist, wobei die Abtriebe im Antriebsstrang hintereinander angeordnet sind. Durch eine solche Lösung lassen sich die meisten bekannten Futtermischwagen mit der erfindungsgemäßen Getriebeanordnung ausstatten. Gleichzeitig ist trotz der Steuerungsmöglichkeit durch die Kupplungen eine nahezu verlustfreie oder zumindest verlustarme Übertragung des Drehmoments durch die direkt koppelnden Wellen entlang des Antriebsstrangs gegeben. Bei in Längsrichtung eines Futtermischwagens versetzt zueinander angeordneten Schnecken kann die Verbindung vorzugsweise über Gelenkwellen erfolgen.

Ein einfacher Aufbau der Futtermischwagengetriebeanordnung ergibt sich, wenn die Abtriebe jeweils zumindest ein Kegelradgetriebe aufweisen, über das die jeweils eine im Wesentlichen vertikal zu dem Antriebsstrang angeordnete Drehachse aufweisenden Schnecken antreibbar sind. Vorzugsweise ist hierbei der Kupplung ein Planetengetriebe als Teil des Abtriebes zum Antrieb der Schnecken nachgeschaltet. Die Kombination einer über die Kupplung in den Antriebsstrang einkuppelbaren Hohlwelle mit aufgesetztem Kegelrad, welches über ein weiteres Abtriebskegelrad ein nach geschaltetes Planetengetriebe beaufschlagen kann, baut besonders klein und lässt sich gut in einen Futtermischwagen bzw. unter diesen integrieren.

Vorzugsweise ist die Kupplung über ein Stellmittel betätigbar, welches auf elektromotorischem, pneumatischem oder insbesondere hydraulischem Wege wirkt. Dieses Stellmittel kann beispielsweise über die Hydraulikanlage eines Schleppers betätigbar sein, so dass das Bedienpersonal während des laufenden Betriebs eine Zu- oder Abschaltung der Schnecken des Futtermischwagens vornehmen kann.

Eine erfindungsgemäße Futtermischwagengetriebeanordnung kann des Weiteren wenigstens eine einem der Abtriebe zugeordnete Abscherkupplung aufweisen, wodurch die Anordnung insgesamt günstiger baut, wobei die Getriebeanordnung jedoch weiterhin im Antriebsstrang vorher befindliche, schaltbare Kupplungen aufweist.

Ein Futtermischwagen, der eine der vorbeschriebenen Futtermischwagengetriebeanordnungen aufweist, ist insbesondere mit einem kleinen Schlepper zu betreiben, mit dem im Blockadefall die Schnecken nacheinander angefahren werden können, sowie ebenfalls komfortabler zu steuern. Gebrochene Bolzen- od.dgl. Überlastsicherungen als Folge der Blockade müssen - da nicht mehr notwendig - nicht repariert werden. Darüber hinaus baut die Getriebeanordnung des Futtermischwagens ausreichend klein, so dass die bislang bekannten Dimensionierungen des Futtermischraumes nicht verändert werden müssen.

Weitere Vorteile und Einzelheiten der Erfindung ergeben sich aus der nachfolgenden Figurenbeschreibung. In den schematischen Abbildungen der Figuren zeigt:
Fig. 1 einen Längsschnitt durch einen erfindungsgemäßen Futtermischwagen,
Fig. 2 einen Teil einer erfindungsgemäßen Getriebeanordnung.

Gleich oder ähnlich wirkende Teile sind - sofern dienlich - mit identischen Bezugsziffern versehen. Einzelne technische Merkmale der nachfolgend beschriebenen Ausführungsbeispiele können auch mit den Merkmalen der vorbeschriebenen Ausführungsbeispiele zu erfindungsgemäßen Weiterbildungen führen.

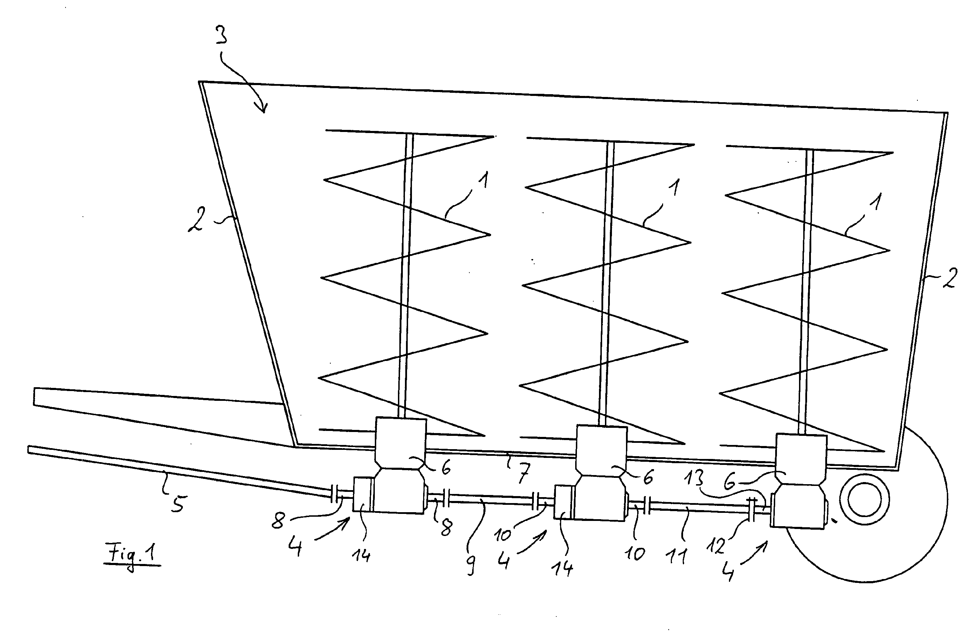

Ein erfindungsgemäßer Futtermischwagen weist gemäß Fig. 1 drei Schnecken 1 auf, die in einem durch Wandungen 2 begrenzten Futtermischraum 3 angeordnet sind. Drei Abtriebe 4 übertragen die Kraft, die über eine Gelenkwelle 5 von einem Schlepper in die Getriebeanordnung eingespeist wird, auf die Schnecken.

Die drei Abtriebe 4 umfassen jeweils einen Kegelrad-Winkelabtrieb. Diesen nachgelagert ist jeweils ein Planetengetriebe 6, welches die jeweilige Drehzahl des Winkelabtriebs ändert. Bei den Schnecken 1 handelt es sich um vorzugsweise einseitig gelagerte Schnecken 1, die lediglich im Boden 7 des Futtermischwagens gelagert sind.

Der Antriebsstrang des Futtermischwagens umfasst eine Eingangswelle 8, die die Antriebswelle darstellt und über eine als Gelenkwelle ausgebildete Zwischenwelle 9 eine Eingangswelle 10 des zweiten Abtriebs 4 antreibt. Diese ist wiederum als durch den Abtrieb 4 durchgehende Welle ausgebildet und treibt eine ebenfalls als Gelenkwelle ausgebildete Zwischenwelle 11 des Antriebsstrangs an, die über eine Abscherkupplung 12 mit der Eingangswelle 13 des dritten Abtriebs 4 verbunden ist. Die Abscherkupplung 12 stellt eine Überlastsicherung dar.

Die von der Antriebsseite her betrachtet beiden ersten Abtriebe 4 des Antriebsstrangs sind mit einer angeflanschten Kupplung 14 versehen, die als lastschaltbare Kupplung die beiden zugehörigen Schnecken 1 antriebslos stellen kann.

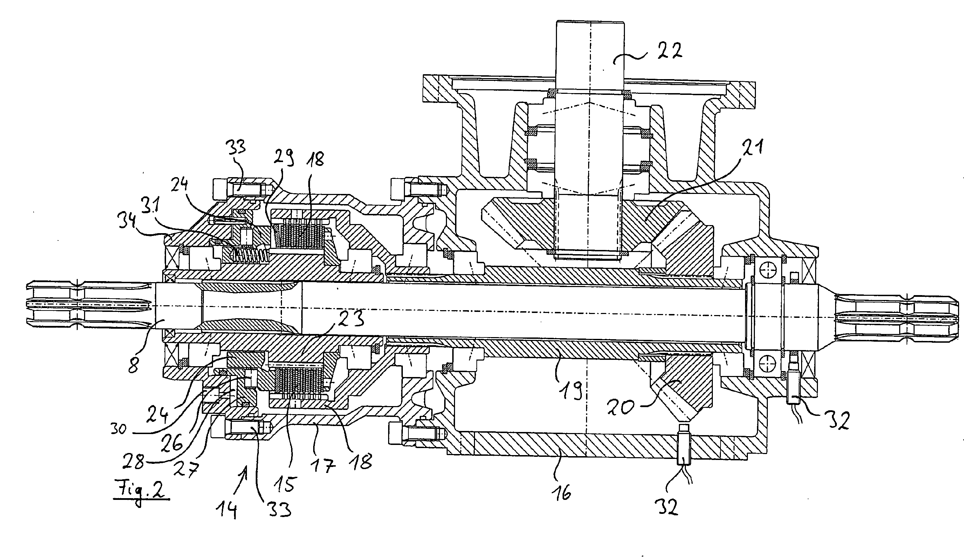

Anstelle der Abscherkupplung 12 kann der hinterste Antrieb 4 ebenfalls über eine schaltbare Kupplung wie die beiden übrigen Abtriebe 4 an den Antriebsstrang gekoppelt werden. Der erfindungsgemäße Futtermischwagen baut bezüglich seiner Getriebeanordnung nicht tiefer als ein herkömmlicher Futtermischwagen, wie insbesondere der Fig. 2 zu entnehmen ist. Ein an ein Gehäuse 16 des Kegelradwinkelabtriebs angeflanschtes Kupplungsgehäuse 17 baut in Richtung hin zur unteren Figurenseite nicht tiefer als das Gehäuse 16 des Winkelabtriebs.

Neben dem Gehäuse 17 weist die Kupplung 14 insbesondere einen Lamellensatz 15 auf. Die Kupplung 14 ist somit als Lamellenkupplung ausgebildet. Ein Teil der Lamellen ist drehfest an ihrem umfangsseitig äußeren Ende mit einem Lamellenträger 18 verbunden. Dieser Lamellenträger 18 greift über eine Verzahnung auf eine Hohlwelle 19 ein und ist wiederum mit dieser drehfest verbunden. Auf der Hohlwelle 19 befindet sich ein erstes Kegelrad 20 des Kegelradwinkelabtriebs, welches mit einem weiteren Kegelrad 21 kämmt, über das eine Abtriebswelle 22 angetrieben wird. Diese Abtriebswelle 22 führt zu dem zugehörigen Planetengetriebe 6.

Die übrigen Lamellen des Lamellenpaares 15 sind umfangsseitig innen in einem weiteren Lamellenträger 23 drehfest angeordnet, welcher wiederum mit der Antriebswelle 8 drehfest verbunden ist. Mittels des Lamellenpaares 15 sind die Antriebswelle 8 und die Hohlwelle 19 antriebsmäßig verbindbar.

Die in der Figur 2 oberhalb der Welle 8 gezeigten Lamellen befinden sich in einem entlasteten Zustand, ein dort befindlicher Teil einer Druckplatte 24 ist von den Lamellen und einer Tellerfeder 29 beabstandet gezeigt. In dieser Anordnung sind Antriebswelle 8 und Hohlwelle 19 antriebsmäßig getrennt.

Der unterhalb der Welle 8 gezeigte Teil des Lamellenpaares 15 entspricht einer anderen Situation und ist über die Druckplatte 24 druckbeaufschlagt. Durch den Druck der Druckplatte 24 in axialer Richtung sind die Lamellen kraftschlüssig miteinander verbunden. Von der Antriebswelle 8 wird Kraft auf die Hohlwelle 19 übertragen. Die Druckplatte 24 wird hierzu über ein Axiallager 26 von einem kolbenartigen Stellglied 27 beaufschlagt. Das Stellglied 27 selbst wird über ein in einen Druckraum 28 eingebrachtes Hydraulikmedium bewegt. Die Kupplung 14 ist demnach hydraulisch betätigbar, wofür ein Anschluss 30 vorgesehen ist, über den die Kupplung an die Hydraulikanlage eines Schleppers koppelbar und mittels eines Stellmittels und/oder einer automatischen Steuervorrichtung betätigbar ist. Bei Drucklosstellung der Kupplung 14 wird die Druckplatte 24 mittels einer Feder 31 in den oberhalb der Welle 8 gezeigten Zustand überführt.

Je nach dem durch die Druckplatte 24 auf den Lamellensatz 18 aufgebrachten Druck kann die Kupplung 14 auch als Überlastsicherung dienen. Bei einer zu großen Last verrutschen die einzelnen Lamellen gegeneinander, so dass Beschädigungen der Getriebeanordnung vermieden werden.

In einer vorteilhaften Ausbildung der Erfindung kann die Kupplung über eine automatische Steuervorrichtung drucklos gestellt und damit freigegeben werden. Hierzu sind vorzugsweise induktiv arbeitende Drehzahlsensoren 32 vorhanden, die die Drehzahlen der Hohlwelle 19 und der Antriebswelle 8 aufnehmen und bei einer insbesondere vorgebbaren Drehzahldifferenz die beiden Wellen entkoppeln.

Die Hohlwelle 19 ist bauraumsparend gerade so lang ausgeführt, dass sie im Gehäuse 16 gelagert werden kann und zusätzlich eine Verzahnung für den Lamellenträger 18 aufweist. Die Antriebswelle 8 ist im ebenfalls im Gehäuse 16 sowie ebenfalls platzsparend mittelbar über das Kupplungsgehäuse 17 gelagert.

Zu Verbesserung von Wartung und Montage ist das Kupplungsgehäuse 17 mit einem über Befestigungsmittel 33 befestigten, abnehmbaren Deckel 34 versehen.

## Patentansprüche

1. Futtermischwagengetriebeanordnung für einen eine Mehrzahl von Schnecken (1) aufweisenden Futtermischwagen, mit einer von einem Schleppfahrzeug antreibbaren Antriebswelle (8), über die mittels wenigstens eines Antriebsstrangs eine Mehrzahl von zu den Schnecken (1) führenden Abtrieben (4) antreibbar sind, **dadurch gekennzeichnet, dass** wenigstens einer der Abtriebe (4) über eine schaltbare Kupplung (14) mit dem Antriebsstrang antriebsmäßig verbindbar ist, um das von der Antriebswelle (8) übertragene Moment unter gezielter Auslassung oder Zuschaltung der über die Kupplung (14) verbindbaren Schnecke (1) zu übertragen.

2. Futtermischwagengetriebeanordnung nach Anspruch 1, **dadurch gekennzeichnet, dass** die Kupplung (14) als lastschaltbare Kupplung ausgebildet ist.

3. Futtermischwagengetriebeanordnung nach einem der vorherigen Ansprüche, **dadurch gekennzeichnet, dass** die Kupplung (14) als Lamellenkupplung ausgebildet ist.

4. Futtermischwagengetriebeanordnung nach einem der vorherigen Ansprüche, **dadurch gekennzeichnet, dass** die Kupplung (14) im Ausgangszustand den zugehörigen Abtrieb (4) mit dem Antriebsstrang verbindet.

5. Futtermischwagengetriebeanordnung nach einem der Ansprüche 1 bis 3, **dadurch gekennzeichnet, dass** die Kupplung (14) im Ausgangszustand den zugehörigen Abtrieb (4) vom Antriebsstrang trennt.

6. Futtermischwagengetriebeanordnung nach einem der vorherigen Ansprüche, **dadurch gekennzeichnet, dass** die Kupplung (14) antriebsmäßig zwischen einem zur Schnecke (14) führenden Zahnrad (20) und der Antriebswelle (8) oder einer den Antriebsstrang mit ausbildenden Zwischenwelle (9) angeordnet ist.

7. Futtermischwagengetriebeanordnung nach Anspruch 6, **dadurch gekennzeichnet, dass** die Kupplung (14) antriebsmäßig zwischen Antriebsstrang und einer eine Welle (8,19) des Antriebsstrangs umschließenden Hohlwelle (19) angeordnet ist, auf der das Zahnrad (20) festgelegt ist.

8. Futtermischwagengetriebeanordnung nach einem der vorherigen Ansprüche, **gekennzeichnet durch** zumindest eine Überlastsicherung (14,12).

9. Futtermischwagengetriebeanordnung nach einem der vorherigen Ansprüche, **dadurch gekennzeichnet, dass** die Kupplung (14) als an die Futtermischwagengetriebeanordnung anflanschbare Nachrüstlösung ausgebildet ist.

10. Futtermischwagengetriebeanordnung nach einem der vorherigen Ansprüche mit zumindest drei Abtrieben für jeweils eine Schnecke (1), **dadurch gekennzeichnet, dass** der Antriebstrang eine Mehrzahl von miteinander verbundenen Zwischenwellen (9,11) aufweist, wobei die Abtriebe (4) entlang des Antriebsstrangs hintereinander angeordnet sind.

11. Futtermischwagengetriebeanordnung nach einem der vorherigen Ansprüche, **dadurch gekennzeichnet, dass** die Abtriebe (4) jeweils zumindest ein Winkelgetriebe aufweisen, über das die jeweils eine im wesentlichen vertikal zu dem Antriebsstrang angeordnete Drehachse aufweisenden Schnecken (1) antreibbar sind.

12. Futtermischwagengetriebeanordnung nach einem der vorherigen Antriebe, **dadurch gekennzeichnet, dass** der Kupplung (14) ein Planetengetriebe (6) zum Antrieb der Schnecken (1) nachgeschaltet ist.

13. Futtermischwagengetriebeanordnung nach einem der vorherigen Ansprüche, **dadurch gekennzeichnet, dass** die Kupplung (14) über ein Stellmittel betätigbar ist.

14. Futtermischwagengetriebeanordnung nach einem der vorherigen Ansprüche, **gekennzeichnet durch** eine Steuervorrichtung, die aufgrund von Signalen zumindest eines in der Getriebeanordnung angeordneten Drehzahlsensors (32) ein automatisches Auskuppeln eines Abtriebs (4) bewirkt.

15. Futtermischwagengetriebeanordnung nach einem der vorherigen Ansprüche, **dadurch gekennzeichnet, dass** wenigstens einem der Abtriebe (4) eine Abscherkupplung zugeordnet ist.

16. Futtermischwagen, **gekennzeichnet durch** eine Futtermischwagengetriebeanordnung nach einem der vorherigen Ansprüche.
